(19) Europäisches Patentamt
European Patent Office
Office européen des brevets

(11) **EP 1 634 790 B1**

(12) **EUROPÄISCHE PATENTSCHRIFT**

(45) Veröffentlichungstag und Bekanntmachung des Hinweises auf die Patenterteilung:
**10.10.2007 Patentblatt 2007/41**

(51) Int Cl.:
***B60T 17/22*** *(2006.01)*

(21) Anmeldenummer: **05019207.9**

(22) Anmeldetag: **05.09.2005**

(54) **Dichtheitsprüfung der Hauptluftleitung eines Zuges**

Testing the tightness of a main airpipe of a train

Tester l'étanchéité de la conduite principale d'un train

(84) Benannte Vertragsstaaten:
**AT CH DE LI**

(30) Priorität: **09.09.2004 DE 102004044027**

(43) Veröffentlichungstag der Anmeldung:
**15.03.2006 Patentblatt 2006/11**

(73) Patentinhaber: **FEW Blankenburg GmbH**
**38889 Blankenburg (DE)**

(72) Erfinder:
• **Becker, Dietmar**
**38889 Blankenburg (DE)**

• **Weissenborn, Uwe**
**38889 Stiege (DE)**

(74) Vertreter: **Zinken-Sommer, Rainer**
**Deutsche Bahn AG**
**Patentabteilung**
**Völckerstrasse 5**
**80939 München (DE)**

(56) Entgegenhaltungen:
WO-A-03/006297          US-A- 5 714 684
US-A- 5 808 909          US-A- 5 963 883

**Beschreibung**

Die Erfindung betrifft ein Verfahren und eine Vorrichtung zur Dichtheitsprüfung einer Hauptluftleitung eines Zuges. Dieses Verfahren wird Insbesondere bei Rangieranlagen angewendet, bei denen mobile oder stationäre Bremsprobengeräte zur Dichtheitsprüfung einer Hauptluftleitung eines Zuges eingesetzt werden.

Bei einer Dichtheitsprüfung der Hauptluftleitung (HL) nach dem Stand der Technik wird die Hauptluftleitung abgesperrt und der Druckabfall in einer bestimmten Zeiteinheit in diesem nun abgeschlossenen Volumen als Kriterium für die Dichtheit herangezogen. Dabei wird kein Unterschied zwischen einem Einzelwagen oder einem ganzen Zug gemacht.

Aus DE 101 33 910 Ist ein Verfahren und eine Anordnung bekannt bei dem parallel zu einem Magnetventil mit größerem Querschnitt für das Füllen der Hauptluftleitung in Strömungsrichtung ein Bypass mit einem zweiten Magnetventil kleineren Querschnittes zusammen mit einem Volumenstromsensor angeordnet ist. Das Füllen der Hauptluftleitung erfolgt durch Öffnen des Magnetventils mit größerem Querschnitt, während das Magnetventil kleineren Querschnittes geschlossen bleibt. Für die Dichtheitsprobe wird das Magnetventil größeren Querschnittes geschlossen und dabei das zweite Magnetventil kleineren Querschnittes geöffnet. Ober das das zweite Magnetventil kleineren Querschnittes wird ein Volumenstrom nachgefüllt. der für die Druckerhaltung in der Hauptluftleitung mindestens erforderlich ist. Der nachfüllende Volumenstrom wird gemessen und ist ein Kriterium für die Dichtheit der Hauptluftleitung.

Zusätzlich wird der zum Nachfüllen der Hauptluftleitung maximal verfügbare Volumenstrom so dimensioniert, dass er den maximal zulässigen Leckstrom übersteigt. Somit ist das Erfassen eines Druckabfalls über einen Drucksensor während des Nachfüllens in der Hauptluftleitung gleichbedeutend mit dem Erkennen einer als undicht zu bewertenden Hauptluftleitung.

Das an das Bremsprobegerät angeschlossene Volumen ist in der Praxis jedoch das eigentliche Hauptleitungsvolumen des Zuges zuzüglich eines Volumens von Rohr- und Schlauchleitungen zwischen dem Bremsprobegerät und dem Beginn der Hauptluftleitung am Zug, dem sog. Kupplungskopf. Das Zusatzvolumen vergrößert hierbei das eigentliche Hauptluftleitungsvolumen und bewirkt bei der herkömmlichen Dichtheitsprüfung insbesondere bei großem Zusatzvolumen und kleinem Hauptluftleitungsvolumen eine massive Beeinflussung des Prüfergebnisses. Insbesondere kann eine eigentlich undichte HL als dicht diagnostiziert werden.

Aus DE 100 58 307 B4 ist eine Bremsprobenanlage zur Prüfung von Druckluftbremsen von Schienenfahrzeugen bekannt, die aus einem zentralen Bremsprobegerät und einer ortsfesten Zusatzgeräteeinheit besteht. Die Zusatzgeräteeinheit besteht aus einem Absperrventil und einem Drucksensor und ist mit dem zentralen Bremsprobegerät über eine Luftleitung und eine elektrischen Verbindungsleitung verbunden. Nachteilig Ist hierbei jedoch, dass die Luftleitung zwischen dem zentralen Bremsprobegerät und der Zusatzgeräteeinheit bei den für die Bremsprobe notwendigen Druckwechsel (Druckabsenkung, ausgehend von Regelbetriebsdruck, zum Anlegen der Bremsen bzw. Druckerhöhung auf den Regelbetriebsdruck zum Lösen der Bremsen) mit entlüftet bzw. belüftet werden muss. Dies schlägt sich in einer längeren Reaktionszeit und einem höheren Luftverbrauch nieder.

Die Leitungslänge zwischen dem Zentralen Bremsprobegerät und der Zusatzgeräteeinheit kann mehrere hundert Meter betragen.

Es ist somlt Aufgabe der Erfindung, ein Verfahren und eine Vorrichtung bereitzustellen, mit dem eine Dichtheitsprüfung einer Hauptluftleitung eines Zuges ohne Beeinflussung des Prüfergebnisses durch Zusatzvolumen gewährleistet wird.

Diese Aufgabe wird für das Verfahren erfindungsgemäß durch die in Anspruch 1 sowie für die Vorrichtung erfindungsgemäß durch die in Anspruch 4 angegebenen Merkmale gelöst.

Ansprüche 2 und 3 sowie 5 bis 9 beinhalten vorteilhafte Ausführungsbeispiele der erfindungsgemäßen Lösung aus Anspruch 1 bzw. Anspruch 4.

Mit dem erfindungsgemäßen Verfahren lässt sich vorteilhaft eine Dichtheltsprüfung der Hauptluftleitung ohne Beeinflussung des Prüfergebnisses durch das Leitungsvolumen zwischen Bremsprobegerät und HL-Kupplungskopf am Zug durchführen. Der Abstand zwischen Bremsprobegerät und dem Beginn der Hauptluftleitung kann also beliebig sein.

Des Weiteren ermöglicht das erfindungsgemäße Verfahren nicht nur eine qualitative sondern auch eine quantitative Aussage über die Dichtheit der Hauptluftleitung.

Unter der Annahme, dass die Temperatur in der HL während des Druckabfalls konstant bleibt, ergibt sich das ausgeströmte Leckvolumen $V_{Leck}$ mit

$$p * V = const.$$

und

$$p_1 \cdot V_{HL} = p_b \cdot V_{A1}$$

$$p_2 \cdot V_{HL} = p_b \cdot V_{A2}$$

sowie

$$V_{Leck} = V_{A1} - V_{A2}$$

mit

$p_1 =$     Startdruck vor dem Druckabfall, absolut
$p_2 =$     Enddruck nach dem Druckabfall, absolut
$V_{A1} =$     Luftvolumen der HL beim Start und Atmosphärendruck
$V_{A2} =$     Luftvolumen der HL nach dem Druckabfall und Atmosphärendruck
$V_{HL} =$     Hauptluftleitungsvolumen
$P_b =$     Luftdruck = 1 bar

zu

$$V_{Leck} = \frac{V_{HL}}{p_b} \cdot (p_1 - p_2)$$

Somit ergibt sich bei Atmosphärendruck, einem Druckabfall von $p_1$-$p_2$ = 0,5 bar und einem Hauptluftleitungs- volumen von 100 $dm^3$ ein entwichenes Leckvolumen von 50 $dm^{-3}$.

Ist ein bestimmter maximaler absoluter Druckabfall zulässig, so steigt das zulässige Leckvolumen $V_{Leck}$ zul linear mit dem Hauptluftleitungsvolumen $V_{HL}$ an. D.h. ein doppelt so langer Zug mit einem doppelt so großen Hauptluftleitungsvolumen darf doppelt so undicht sein, wie ein einfach langer Zug.

Demzufolge zählt nicht das absolut entweichende Leckvolumen $V_{Leck}$, sondern das Verhältnis von $V_{Leck}$ zum Hauptluftleitungsvolumen $V_{HL}$. Somit ergibt sich ein zulässige Verhältnis $f_{zul}$ von $V_{Leck\ zul}$ zum Hauptluftleitungsvolumen $V_{HL}$ zu

$$\frac{V_{Leck\ zul}}{V_{HL}} = (p_1 - p_2) \cdot \frac{1}{p_b} = f_{zul}$$

Mit

$$p_1 - p_2 = 0,5\ \text{bar}$$

und

$$p_b = 1\ \text{bar}$$

ergibt sich

$$f_{zul} = 0{,}5$$

Um eine Aussage über die Dichtheit des Systems zu machen, muss sowohl das entwichene Leckvolumen als auch das Hauptluftleitungsvolumen bekannt sein.

Für ein dichtes Systems gilt, dass ein vorhandenes Verhältnis $f_{vorh}$ von $V_{Leck}$ zum Hauptluftleitungsvolumen $V_{HL}$

$$f_{vorh} = \frac{V_{Leck}}{V_{HL}}$$

stets kleiner oder gleich dem maximal zulässigen Verhältnis $f_{zul}$ ist:

$$f_{vorh} \leq f_{zul}$$

Für ein undichtes System gilt demzufolge:

$$f_{vorh} > f_{zul}$$

Das an ein Bremsprobegerät angeschlossene Volumen ist in der Praxis jedoch das eigentliche Hauptleitungsvolumen $V_{HL}$ des Zuges zuzüglich eines Volumens V' von Rohr- und Schlauchleitungen zwischen dem Bremsprobegerät und dem Kupplungskopf:

$$V_{ges} = V_{HL} + V' \qquad\qquad (2)$$

Das Zusatzvolumen V' vergrößert hierbei das eigentliche Hauptluftleitungsvolumen $V_{HL}$ und bewirkt bel der herkömmlichen Dichtheitsprüfung insbesondere bei großem Zusatzvolumen V' und kleinem Hauptluftleitungsvolumen $V_{HL}$ eine massive Beeinflussung des Prüfergebnisses.

Bestimmung des ausströmenden Leckvolumenstroms $V_{Leck}$-

Als erster Verfahrensschritt der Dichtheitsprüfung der HL wird der ausströmende Leckvolumenstrom bestimmt. Hierbei wird nach dem Füllvorgang nur noch der zur Erhaltung des Druckes der gefüllten Leitung notwendige Volumenstrom $V_{zu}$ vom Druckregler in die Hauptluftleitung eingespeist. Dabei ist der eingespeiste Massenstrom $\dot{m}_{Zu}$ gleich dem über die Lecks in der HL austretenden Massestrom $\dot{m}_{Leck}$:

$$\dot{m}_{Zu} = \dot{m}_{Leck} \cdot$$

Mit

$$\dot{m}_{Zu} = \rho_1 \cdot \dot{V}_{zu}$$

und

$$\dot{m}_{Leck} = \rho_b \cdot \dot{V}_{Leck}$$

sowie

$$\rho = \frac{p}{R_{L,0} \cdot T}$$

gilt bei T = konst.

$$\frac{\rho_1}{\rho_b} = \frac{p_1}{p_b}$$

und es ergibt sich

$$p_1 \cdot \dot{V}_{zu} = p_b \cdot \dot{V}_{Leck}$$

Somit lässt sich der gemessene Volumenstrom $V_{zu}$ in den Leckvolumenstrom $V_{Leck}$ umrechnen:

$$\dot{V}_{Leck} = \frac{p_1}{p_b} \cdot \dot{V}_{zu} \tag{3}$$

Ermittlung des Druckabfalls $p_1$ -$p_2$ in der Hauptluftleitung:

Als zweiter Verfahrensschritt der Dichtheitsprüfung wird die Nachspeisung vollständig abgesperrt (In der Anordnung die Magnetventile Pos.2 und 4 geschlossen). Nun wird der Druckabfall $p_1$- $p_2$ in der Hauptluftleitung über eine Messzeit $t_{mess}$, insbesondere 1 Minute, mittels eines Drucksensors gemessen.

Rechnerische Bestimmung des Verhältnisses $f_{vorh}$:

Aus dem ermittelten Leckvolumenstrom $V_{Leck}$ und dem gemessenen Druckabfall $p_1$- $p_2$ in der Hauptluftleitung wird nun das Verhältnis $f_{vorh}$ rechnerisch bestimmt.
Das Gesamtvolumen $V_{ges}$ ergibt sich aus Gleichung (1), wobei $V_{HL}$ durch $V_{ges}$ ersetzt wird, zu:

$$V_{Leck} = \frac{V_{ges}}{p_b} (p_1 - p_2)$$

zu

$$V_{ges} = \frac{V_{Leck} \cdot p_b}{p_1 - p_2}$$

mit dem gemessenen Druckabfall $p_1$- $p_2$ und dem bei diesem Druckabfall entwichenen Luftvolumen $V_{Leck}$. Mit Gleichung (2) ergibt sich damit für das Hauptluftleitungsvolumen $V_{HL}$:

$$V_{HL} = \frac{V_{Leck} \cdot p_b}{p_1 - p_2} - V' \tag{4}$$

Damit ergibt sich das zulässige Verhältnis:

$$f_{vorh} = \frac{V_{Leck}}{V_{HL}}$$

zu

$$f_{vorh} = \frac{1}{\dfrac{p_b}{p_1 - p_2} - \dfrac{V''}{V_{Leck}}} \qquad (5)$$

Bei der Berechnung von $V_{Leck}$ ist zu beachten, dass der über Lecks der HL ausströmende Volumenstrom nicht konstant ist. Infolge des sinkenden Druckes in der HL nimmt er beginnend von dem beim Startdruck bestimmten Leck-volumenstrom $\dot{V}_{Leck}$ bis zum Enddruck hin ab.

Das Leckvolumen ergibt sich aus einem mittleren Leckvolumenstrom $\overline{\dot{V}}_{Leck}$ und einer Messzeit $t_{mees}$, insbesondere 1 min, zu

$$V_{Leck} = \overline{\dot{V}}_{Leck} \cdot t_{mess} \qquad (6)$$

Zur Bestimmung des mittleren Leckvolumenstroms sind die Gesetzmäßigkeiten beim Ausströmen von Gasen zu beachten.

Für Ausströmvorgänge über Düsen gilt bekanntlich die Beziehung

$$\dot{m} = \mu \cdot A_a \cdot \Psi \cdot p_1 \cdot \sqrt{\frac{2}{R_{L,O} \cdot T_1}}$$

mit

$\Psi = $      Ausflussfunktion
$\mu = $      Ausflusszahl
$A_a = $      Ausflussquerschnitt
$R_{L/O} = $      individuelle Gaskonstante
$T_1 = $      Innentemperatur

Bei überkritischem Ausströmen gilt für die Ausflussfunktion

$$\Psi = \Psi_{max} = const.$$

Die weiteren Parameter $\mu$, $A_a$, $R_{L/O}$ sowie $T_1$ sind ebenfalls konstant, so dass der ausströmende Massenstrom bzw. Volumenstrom proportional zum Innendruck $p_1$ ist:

$$\dot{m} \sim p_1 \qquad (7)$$

Somit fließt der mittlere Leckvolumenstrom $\overline{\dot{V}}_{Leck}$ bei einem arithmetisch gemittelten Druck $\overline{p}$ aus mit

$$\bar{p} = p_1 - \frac{p_1 - p_2}{2} = \frac{1}{2} \cdot (p_1 + p_2) \qquad (8)$$

Aufgrund der linearen Abhängigkeit des Leckvolumenstromes lässt sich folgende Verhältnisgleichung anwenden:

$$\frac{\dot{V}_{Leck}}{\overline{\dot{V}}_{Leck}} = \frac{p_1}{\bar{p}} \qquad (9)$$

Mit Gleichung (3) ergibt sich für $\overline{\dot{V}}_{Leck}$ aus Gleichung (9)

$$\overline{\dot{V}}_{Leck} = \dot{V}_{Leck} \cdot \frac{\bar{p}}{p_1} = \dot{V}_{zu} \cdot \frac{\bar{p}}{p_b} \qquad (10)$$

und damit für $V_{Leck}$ mit Gleichung (6)

$$V_{Leck} = \dot{V}_{zu} \cdot \frac{\bar{p}}{p_b} \cdot t_{mess} \qquad (11)$$

Damit ergibt sich das Verhältnis $f_{vorh}$ aus Gleichung (5) zu:

$$f_{vorh} = \frac{1}{\dfrac{p_b}{p_1 - p_2} - \dfrac{V'}{\dot{V}_{zu}} \cdot \dfrac{p_b}{\bar{p}} \cdot \dfrac{1}{t_{mess}}} \qquad (12)$$

Ermittlung des Zusatzvolumens V':

Das Zusatzvolumen V' lässt sich grob aufgrund der örtlichen Gegebenheiten aus der Leitungslänge und dem Durchflussquerschnitt der Rohr- und Schlauchleitungen zwischen dem Bremsprobegerät und Kupplungskopf abschätzen.
Exakt ist jedoch eine Ermittlung des Zusatzvolumens V' anhand des erfindungsgemäßen Verfahrens durch eine sog. Nullmessung, wobei nicht ein Zug an den Kupplungskopf angeschlossen wird, sondern der Kupplungskopf durch einen Verschluss abgeschlossen wird, d.h. es gilt

$$V_{HL} = 0$$

In dem Verschluss befindet sich ein beliebiges aber konstantes Leck, das eine Undichtheit des Zusatzvolumens mit einem ausströmenden Volumen $V'_{Leck}$ simuliert.
Der entsprechende Leckvolumenstrom ergibt sich gemäß Gleichung (3) zu

$$\dot{V}'_{Leck} = \frac{p'_1}{p_b} \cdot \dot{V}'_{zu}$$

Gemäß Gleichung (11) ergibt sich das entsprechende ausströmende Volumen V'$_{Leck}$ zu:

$$V'_{Leck} = \dot{V}'_{zu} \cdot \frac{\overline{p}'}{p_b} \cdot \dot{t}_{mess}$$

Das Zusatzvolumen V' ergibt sich aus Gleichung (1), wobei V$_{HL}$ durch V' ersetzt wird

$$V'_{Leck} = \frac{V'}{p_b} \left( p'_1 - p'_2 \right)$$

zu

$$V' = \frac{V'_{Leck} \cdot p_b}{p'_1 - p'_2}$$

und mit Gleichung (11') zu:

$$V' = \dot{V}'_{zu} \cdot \overline{p}' \cdot t'_{mess} \cdot \frac{1}{p'_1 - p'_2}$$

Damit ergibt sich für das Verhältnis f$_{vorh}$ aus Gleichung (12):

$$f_{vorh} = \frac{1}{\dfrac{p_b}{p_1 - p_2} - \dfrac{p_b}{p'_1 - p'_2} \cdot \dfrac{\dot{V}'_{zu}}{\dot{V}_{zu}} \cdot \dfrac{\overline{p}'}{\overline{p}} \cdot \dfrac{t'_{mess}}{t_{mess}}}$$

Mit Gleichung (13) lässt sich das Verhältnis f$_{vorh}$ vollständig und exakt berechnen und mit f$_{zul}$ verglelchen. Damit kann sowohl eine qualitative als auch eine quantitative Aussage über die Dichtheit der Hauptluftleitung getroffen werden.

Bei relativ großem Zusatzvolumen V' (>150 dm$^3$) und relativ kurzen Zügen wird der im zweiten Verfahrenschritt von Anspruch 1 gemessene Druckabfall $p_1 - p_2$ sehr klein (< 0,05 bar).

Dadurch wird der relative Messfehler unzulässig groß. D. h. der in der Berechnung von f$_{vorh}$ eingehende Druckabfall führt zu einem unzulässig großen Fehler des Verhältnisses f$_{vorh}$.

Die relativ großen Zusatzvolumina treten auf, da bei großem Abstand zwischen Bremsprobegerät und Zug Rohrleitungen großen Querschnitts verlegt werden müssen, um den Druckabfall vom Ausgang des Bremsprobegerätes bis zum Einspeisepunkt am Zug in zulässigen Grenzen zu halten. Bei Überschreitung des für die Messgenauigkeit des Verfahrens zulässigen Zusatzvolumens wird erfindungsgemäß gemäß Anspruch 5 in die Rohrleitung vom Bremsprobegerät zum Zug eine Ventileinheit eingefügt. Diese Ventileinheit beinhaltet zwei Magnetventile, einen Druckregler und einen Drucksensor.

Die Ventileinheit wird wie in DE 100 58 307 B4 so zugeordnet, dass die Leitungslänge zwischen Ventileinheit und Zug 25 m nicht überschreitet. Im Gegensatz zu der in der DE 100 58 307 B4 beschriebenen Lösung wird die Ventileinheit vom Bremsprobegerät mit einem konstanten Druck von insbesondere 6 bar versorgt und es werden alle Funktionen der Bremsprobe durch die Ventileinheit pneumatisch gesteuert.

Die Dichtheitsprüfung der Hauptluftleitung wird dann nach dem herkömmlichen Verfahren durchgeführt, indem die Hauptluftleitung in der Ventileinheit durch ein Magnetventil abgesperrt und mit dem Drucksensor in der Ventileinheit der Druckabfall in der Hauptluftleitung des Zuges bestimmt wird.

Über das zweite Magnetventil in der Ventileinheit erfolgt das Entlüften der Hauptluftleitung zur Druckabsenkung beim Anlegen der Bremsen. Der Druckregler in der Ventileinheit regelt den Druck in der Hauptluftleitung während der Bremsprobe. Er speist den zur Druckerhaltung notwendigen Volumenstrom in die Hauptluftleitung ein.

Die Ventileinheit ist insbesondere über eine elektrische Leitung mit dem Bremsprobegerät verbunden. Ober diese erfolgt die Übermittlung der Messdaten des Drucksensors, die Ansteuerung der beiden Magnetventile sowie die Übertragung des Sollwertes für den Druckregler.

Die Erfindung wird nachstehend anhand von eines Ausführungsbeispiels und einer Zeichnung mit drei Figuren näher erläutert. Die Figuren zeigen in

**Fig. 1** schematisch einen Zug mit einem Hauptluftleitungsvolumen $V_{HL}$, der über Rohr- und Schlauchleitungen an ein Bremsprobegerät angeschlossen ist,

**Fig. 2** schematisch ein Leckvolumen $V_{Leck\,zul}$ als Funktion des Hauptluftleitungsvolumen $V_{HL}$,

**Fig. 3** schematisch eine Anordnung In einem Bremsprobegerät zur Bestimmung des Leckvolumenstroms $\dot{V}_{Leck}$,

**Fig. 4** schematisch eine Ventileinheit, die in die Leitung vom Bremsprobegerät zum Zug einfügt ist.

Ein besonders vorteilhaftes Ausführungsbeispiel betrifft Dichtheitsprüfung einer Hauptluftleitung eines Zuges mittels eines Bremsprobengerätes.

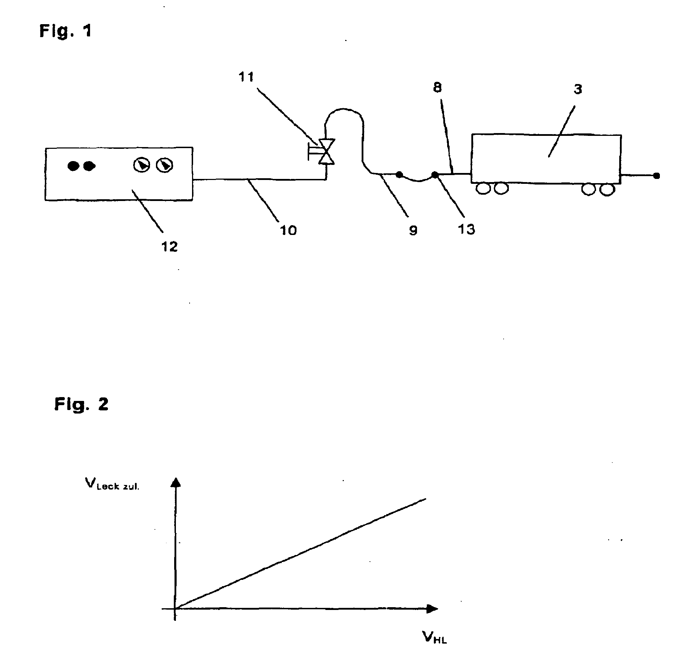

Gemäß **Fig. 1** besteht ein an ein Bremsprobegerät 12 angeschlossenes Volumen aus einem Volumen $V_{HL}$ der Hauptluftleitung B des Zuges 3 zuzüglich einem Zusatzvolumen V'. Das Zusatzvolumen V' wird hierbei durch Rohrleitungen 10 und Schlauchleitungen 9 gebildet, die das Bremsprobegerät 12 mit dem Kupplungskopf 13 des Zuges 3 verbinden.

Ist nun ein bestimmter, vorgegebener maximaler Druckabfall durch Lecks der Hauptluftleitung 8 des Zuges 3 zulässig, so steigt gemäß **Fig. 2** das zulässige Leckvolumen $V_{Leck\,zul}$ linear mit einer Vergrößerung des Hauptluftleitungsvolumens $V_{HL}$, d.h. einer Verlängerung des Zuges 3, an. D.h. je länger der Zug ist und je größer das Hauptluftleitungsvolumens $V_{HL}$ ist, desto größer Ist das zulässige Leckvolumen $V_{Leck\,zul.}$

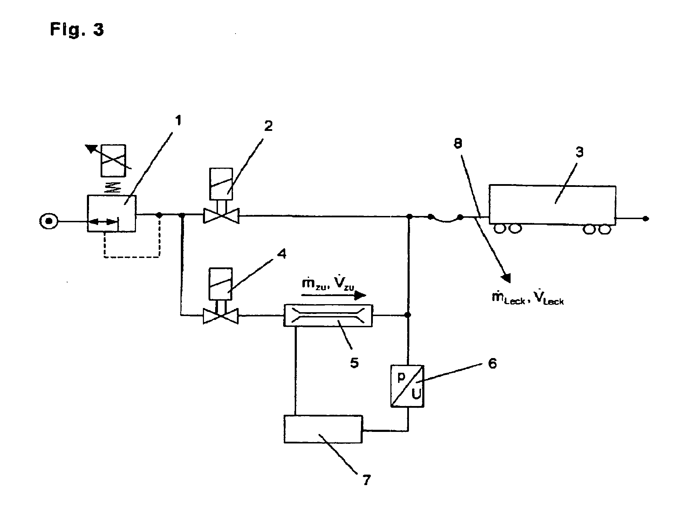

In **Fig. 3** ist eine Anordnung im Bremsprobegerät 12 zur Bestimmung des Leckvolumenstroms $\dot{V}_{Leck}$ dargestellt.

Die Hauptluftleitung des angeschlossenen Zuges 3 wird mit dem am Druckregler 1 eingestelltem Druck von 4,8 bar Überdruck für Güterzüge Ober das geöffnete Magnetventil 2 aufgefüllt. Das Magnetventil 4 ist geschlossen.

Nach Erreichen des Füllzustandes wird das Magnetventil 2 geschlossen und das Magnetventil 4 geöffnet.

Nun strömt die Druckluft über den Volumenstromsensor 5 in die Hauptluftleitung. Der Druck in der Hauptluftleitung wird von einer Steuereinrichtung 7 mittels eines Drucksensors 6 überwacht. Nach einer Anfangsphase von insbesondere 15 s wird nur noch der zur Erhaltung des Druckes der gefüllten Leitung notwendige Volumenstrom $V_{zu}$ vom Druckregler in die Hauptluftleitung eingespeist. Dabei ist der durch den Volumenstromsensor fließende Massenstrom $\dot{m}_{zu}$ gleich dem aus der HL des Zuges austretenden Massenstrom $\dot{m}_{Leck}$. Für die Dichtheitsprüfung der HL wird nun als erster Verfahrensschritt dieser ausströmende Leckvolumenstrom bestimmt

Dabei ist Bedingung, dass die Nachspeisung druckerhaltend ist, d. h. das der Druck in der HL konstant 4,8 bar Überdruck betragen muss.

Als zweiter Verfahrensschritt der Dichtheitsprüfung wird die Nachspeisung vollständig abgesperrt, d.h. die Magnetventile 2 und 4 geschlossen. Nun wird der Druckabfall $p_1$- $p_2$ in der Hauptluftleitung über eine Messzeit $t_{mess}$, insbesondere 1 Minute, mittels eines Drucksensors gemessen.

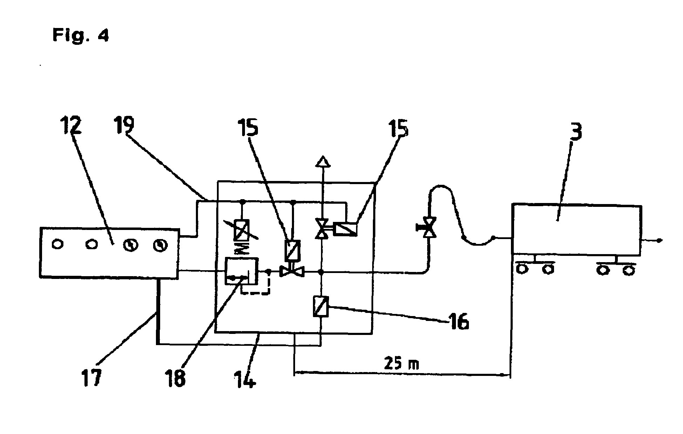

Gemäß **Fig. 4** ist in die Leitung vom Bremsprobegerät zum Zug eine Ventileinheit 14 einfügt. Diese Ventileinheit 14 beinhaltet zwei Magnetventile 15.einen Druckregler 18 und einen Drucksensor 16. Die Übermittlung der Messdaten vom Drucksensor 16 an das Bremsprobegerät 12 erfolgt durch eine elektrische Leitung oder eine optische Leitung 17.

**Bezugszeichenliste:**

1    Druckregler

2    Magnetventil

3    Zug

4    Magnetventil

5    Volumenstromsensor

6    Drucksensor

7    Steuereinrichtung

8    Hauptluftleitung (HL)

9    Schlauchleitung

10   Rohrleitung

11   Befüllständer

12   Bremsprobegerät

13   Kupplungskopf

14   Ventileinheit

15   Magnetventil

16   Drucksensor

17   Lichtwellenlelter

18   Druckregler

19   Elektrische Leitung

**Liste verwendeter Formelzeichen:**

$V$ = Volumen
$V_{Leck}$ = Leckvolumen
$V'$ = Zusatzvolumen
$V_{A1}$ = Luftvolumen der HL beim Start und Atmosphärendruck
$V_{A2}$ = Luftvolumen der HL nach dem Druckabfall und Atmosphärendruck
$V_{HL}$ = Hauptluftleitungsvolumen
$V_{Leck\ zul}$ = zulässiges Leckvolumen
$V_{geB}$ = Gesamtvolumen
$\dot{V}_{Leck}$ = Leckvoiumenstrom

$\overline{\dot{V}}_{Leck}$ = mittlerer Leckvolumenstrom
$\dot{m}_{zu}$ = durch den Volumenstromsensor fließender Massenstrom
$\dot{m}_{Leck}$ = aus der HL des Zuges austretender Massenstrom
$T$ = Temperatur der Luft in K
$\rho$ = Dichte der Luft
$\rho_1$ = Dichte der Luft bei $p_1$
$\rho_h$ = Dichte der Luft bei $p_b$
$p$ = Druck
$p_1$ = Startdruck, absolut
$p_2$ = Enddruck, absolut
$p_b$ = Luftdruck
$\overline{p}$ = arithmetisch gemittelter Druck
$t_{mess}$ = Messzeit
$f_{zul}$ = zulässiges Verhältnis von $V_{Leck\ zul}$ zum Hauptluftleitungsvolumen $V_{HL}$
$f_{vorh}$ = vorhandenes Verhältnis von $V_{Leck}$ zum Hauptluftleitungsvolumen $V_{HL}$
$\Psi$ = Ausflussfunktion

$\mu$ = Ausflusszahl
$A_a$ = Ausflussquerschnitt
$R_{L/O}$ = Individuelle Gaskonstante
$T_1$ = Innentemperatur

**Patentansprüche**

1. Verfahren zur Dichtheitsprüfung einer Hauptluftleitung eines Zuges durch ein Bremsprobegerät, wobei ein an das Bremsprobegerät angeschlossenes Volumen ein Hauptleitungsvolumen, $V_{HL}$ des Zuges zuzüglich eines Zusatzvolumens von Rohr- und Schlauchleitungen V' zwischen dem Bremsprobegerät und einem Kupplungskopf am Beginn der Hauptluftleitung des Zuges ist, **dadurch gekennzeichnet, dass**

   • nach einem Füllvorgang nur noch ein zur Erhaltung eines Druckes der gefüllten Leitung notwendiger Volumenstrom $\dot{V}_{Zu}$ von einem Druckregler in die Hauptluftleitung eingespeist wird, und hierdurch ein ausströmender Leckvolumenstrom $\dot{V}_{Leck}$ bestimmt wird,
   • eine Nachspeisung zur Erhaltung des Druckes der gefüllten Leitung vollständig abgesperrt wird und ein Druckabfall $p_1 - p_2$ in der Hauptluftleitung über eine Messzeit $t_{mess}$ mittels eines Drucksensors gemessen wird,

   wobei $p_1$ einen absoluten Startdruck und $p_2$ einen absoluten Enddruck bezeichnet,

   • aus dem ermittelten Leckvolumenstrom $\dot{V}_{Leck}$ und dem gemessenen Druckabfall $p_1 - P_2$ in der Hauptluftleitung nun ein Verhältnis $f_{vorh}$ von $V_{Leck}$ zum Hauptluftleitungsvolumen $V_{HL}$ rechnerisch mit der Beziehung

$$f_{vorh} = \cfrac{1}{\cfrac{p_b}{p_1 - p_2} - \cfrac{V'}{\dot{V}_{zu}} \cdot \cfrac{p_b}{\overline{p}} \cdot \cfrac{1}{t_{mess}}}$$

   mit einem arithmetisch gemittelten Druck $\overline{p}$ und einem Atmosphärendruck $p_b$ bestimmt wird.

2. Verfahren zur Dichtheitsprüfung einer Hauptluftleitung eines Zuges nach Anspruch 1, **dadurch gekennzeichnet, dass** das Zusatzvolumen V' aus der Leitungslänge und dem Durchflussquerschnitt der Rohr- und Schlauchleitungen zwischen dem Bremsprobegerät und Kupplungskopf abgeschätzt wird.

3. Verfahren zur Dichtheitsprüfung einer Hauptluftleitung eines Zuges nach Anspruch 1, **dadurch gekennzeichnet, dass** das Zusatzvolumen V' durch eine Messung nach Anspruch 1 ermittelt wird, wobei nicht ein Zug an den Kupplungskopf angeschlossen wird, sondern der Kupplungskopf durch einen Verschluss abgeschlossen wird, und damit das Verhältnis $f_{vorh}$ rechnerisch mit der Beziehung

$$f_{vorh} = \cfrac{1}{\cfrac{p_b}{p_1 - p_2} - \cfrac{p_b}{p_1' - p_2'} \cdot \cfrac{\dot{V}_{zu}'}{\dot{V}_{zu}} \cdot \cfrac{\overline{p}'}{\overline{p}} \cdot \cfrac{t_{mess}'}{t_{mess}}}$$

   bestimmt wird.

4. Vorrichtung zur Dichtheitsprüfung einer Hauptluftleitung eines Zuges umfassend ein Bremsprobegerät, wobei ein an das Bremsprobegerät anschliessbares Volumen ein Hauptleitungsvolumen $V_{HL}$ des Zuges zuzüglich eines Zusatzvolumens von Rohr- und Schlauchleitungen V' zwischen dem Bremsprobegerät und einem Kupplungskopf am Beginn der Hauptluftleitung des Zuges ist, und umfassend ein erstes (2) und ein zweites (u) Magnetventil, einen Volumenstromsensor (5), eine Steuereinrichtung (7), einen Drucksensor (6), einen Druckregler (1) und eine Datenverarbeitungsanlage **dadurch gekennzeichnet, dass** die Vorrichtung derart ausgebildet ist daß im Betrieb

• Druckluft mit einem an dem Druckregler (1) eingestellten Druck über das erste Magnetventil (2) in die Hauptluftleitung des angeschlossenen Zuges (3) einströmt während das zweite Magnetventil (4) geschlossen ist,
• nach Erreichen eines vorgegebenen Druckes eines Füllzustandes der Hauptluftleitung das erste Magnetventil (2) schließt und das zweite Magnetventil (4) öffnet,
• die Druckluft über einen Volumenstromsensor (5) in die Hauptluftleitung einströmt und die Steuereinrichtung (7) mittels eines Drucksensors (6) den Druck in der Hauptluftleitung überwacht,
• nach einer Anfangsphase der Druckregler (1) nur noch einen zur Erhaltung des Druckes der gefüllten Leitung notwendigen Volumenstrom $\dot{V}_{zu}$ in die Hauptluftleitung einspeist,
• die Magnetventile (2) und (4) schließen und die Nachspeisung vollständig absperren und der Drucksensor einen Druckabfall $p_1 - p_2$ in der Hauptluftleitung über eine Messzeit $t_{mess}$ ermittelt, wobei $p_1$ einen absoluten Startdruck und $p_2$ einen absoluten Enddruck bezeichnet,
• die Datenverarbeitungsanlage aus dem ermittelten Leckvolumenstrom $\dot{V}_{Leck}$ und dem gemessenen Druckabfall $p_1 - p_2$ in der Hauptluftleitung nun ein Verhältnis $f_{vorh}$ von $V_{Leck}$ zum Hauptluftleitungsvolumen $V_{HL}$ rechnerisch mit der Beziehung

$$f_{vorh} = \cfrac{1}{\cfrac{p_b}{p_1 - p_2} - \cfrac{V'}{\dot{V}_{zu}} \cdot \cfrac{p_b}{\bar{p}} \cdot \cfrac{1}{t_{mess}}}$$

mit einem arithmetisch gemittelten Druck $\bar{p}$ und einem Atmosphärendruck $p_b$ bestimmt.

5. Vorrichtung zur Dichtheitsprüfung einer Hauptluftleitung eines Zuges nach Anspruch 4, **dadurch gekennzeichnet, dass** in die Leitung vom Bremsprobegerät zum Zug eine Ventileinheit (14) eingefügt ist, die Ventileinheit zwei Magnetventile (15), einen Druckregler (18) und einen Drucksensor (16) umfasst, das Bremsprobegerät die Ventileinheit mit einem konstanten Druck versorgt und die Ventileinheit alle Funktionen der Bremsprobe pneumatisch steuert.

6. Vorrichtung zur Dichtheitsprüfung einer Hauptluftleitung eines Zuges nach Anspruch 5, **dadurch gekennzeichnet, dass** das Bremsprobegerät die Ventileinheit (14) mit einem konstanten Druck von 6 bar versorgt.

7. Vorrichtung zur Dichtheitsprüfung einer Hauptluftleitung eines Zuges nach mindestens einem der Ansprüche 4 und 5, **dadurch gekennzeichnet, dass** die Ventileinheit so angeordnet ist, dass die Leitung zwischen Ventileinheit und Zug eine Länge von 25 m nicht überschreitet

8. Vorrichtung zur Dichtheitsprüfung einer Hauptluftleitung eines Zuges nach mindestens einem der Ansprüche 4 bis 6, **dadurch gekennzeichnet, dass** zur Ermittlung des Druckabfalls das Magnetventil in der Ventileinheit geschlossen ist und der Drucksensor den Druckabfall bestimmt.

9. Vorrichtung zur Dichtheitsprüfung einer Hauptluftleitung eines Zuges nach mindestens einem der Ansprüche 4 bis 7, **dadurch gekennzeichnet, dass** die Übermittlung der Messdaten vom Drucksensor an das Bremsprobegerät durch eine optische Leitung erfolgt.

**Claims**

1. A method for checking the tightness of a main air pipe of a train by means of a brake testing device, wherein a volume connected to the brake testing device consists of a main pipe volume $V_{HL}$ of the train plus an additional volume of pipe lines and hose lines V' between the brake testing device and a coupling head at the beginning of the main air pipe of the train,
**characterized in that**

• only a volumetric flow $V_{Zu}$ required for maintaining a pressure of the filled pipe is fed into the main air pipe by a pressure regulator after the filling process in order to thusly determine an escaping volumetric leakage flow $V_{Leck}$,
• a backfeed for maintaining the pressure of the filled pipe is completely shut off and a pressure drop $p_1 - p_2$ in the main air pipe is measured by means of a pressure sensor over a measuring time $t_{mess}$, wherein $p_1$ designates an absolute starting pressure and $p_2$ designates an absolute ultimate pressure, and
• a ratio $f_{vorh}$ between $V_{Leck}$ and the main air pipe volume $V_{HL}$ is now calculated from the determined volumetric leakage flow $V_{Leck}$ and the measured pressure drop $p_1 - P_2$ in the main air pipe with the relation

$$f_{vorh} = \cfrac{1}{\cfrac{p_b}{p_1 - p_2} - \cfrac{V'}{\dot{V}_{zu}} \cdot \cfrac{p_b}{\overline{p}} \cdot \cfrac{1}{t_{mess}}}$$

with an arithmetically averaged pressure p and an atmospheric pressure $p_b$.

2. The method for checking the tightness of a main air pipe of a train according to Claim 1, **characterized in that** the additional volume V' is estimated based on the length and the flow cross section of the pipe lines and hose lines between the brake testing device and the coupling head.

3. The method for checking the tightness of a main air pipe of a train according to Claim 1, **characterized in that** the additional volume V' is determined by means of a measurement according to Claim 1, wherein no train is connected to the coupling head, but the coupling head is instead closed by means of a seal in order to thusly calculate the ratio $f_{vorh}$ with the relation

$$f_{vorh} = \cfrac{1}{\cfrac{p_b}{p_1 - p_2} - \cfrac{p_b}{p_1' - p_2'} \cdot \cfrac{\dot{V}_{zu}'}{\dot{V}_{zu}} \cdot \cfrac{\overline{p}'}{\overline{p}} \cdot \cfrac{t_{mess}'}{t_{mess}}}$$

4. A device for checking the tightness of a main air pipe of a train which comprises a brake testing device, wherein a volume connected to the brake testing device consists of a main pipe volume $V_{HL}$ of the train plus an additional volume of pipe lines and hose lines V' between the brake testing device and a coupling head at the beginning of the main air pipe of the train, and wherein said device comprises a first (2) and a second (4) solenoid valve and a volumetric flow sensor (5), a control device (7), a pressure sensor (6), a pressure regulator (1) and a data processing system,
**characterized in that**

• compressed air flows into the main air pipe of the connected train (3) with a pressure adjusted by the pressure regulator (1) via the first solid valve (2) while the second solid valve (4) is closed,
• the first solenoid valve (2) closes and the second solenoid valve (4) opens after a predetermined pressure of a filling state of the main air pipe is reached,
• the compressed air flows into the main air pipe via a volumetric flow sensor (5) and the control device (7) monitors the pressure in the main air pipe by means of a pressure sensor (6),
• the pressure regulator (1) only feeds the volumetric flow $V_{zu}$ required for maintaining the pressure of the filled pipe into the main air pipe after an initial phase,

• the solenoid valves (2) and (4) close, the backfeed is completely shut off and the pressure sensor determines a pressure drop $p_1 - P_2$ in the main air pipe over a measuring time $t_{mess}$, wherein $p_1$ designates an absolute starting pressure and $p_2$ designates an absolute ultimate pressure, and

• the data processing system calculates a ratio $f_{vorh}$ between $V_{Leck}$ and the main air pipe volume $V_{HL}$ from the determined volumetric leakage flow $V_{Leck}$ and the measured pressure drop $p_1 - p_2$ in the main air pipe with the relation

$$f_{vorh} = \cfrac{1}{\cfrac{p_b}{p_1 - p_2} - \cfrac{V'}{\dot{V}_{zu}} \cdot \cfrac{p_b}{\bar{p}} \cdot \cfrac{1}{t_{mess}}}$$

with an arithmetically averaged pressure p and an atmospheric pressure $p_b$.

5. The device for checking the tightness of a main air pipe of a train according to Claim 4, **characterized in that** a valve unit (14) is inserted into the line leading from the brake testing device to the train, **in that** the valve unit comprises two solenoid valves (15), a pressure regulator (18) and a pressure sensor (16), **in that** the brake testing device supplies the valve unit with a constant pressure, and **in that** the valve unit controls all functions of the brake test pneumatically.

6. The device for checking the tightness of a main air pipe of a train according to Claim 5, **characterized in that** the brake testing device supplies the valve unit (14) with a constant pressure of 6 bar.

7. The device for checking the tightness of main air pipe of a train according to at least one of Claims 4 and 5, **characterized in that** the valve unit is arranged such that the line between the valve unit and the train does not exceed a length of 25 m.

8. The device for checking the tightness of a main air pipe of a train according to at least one of Claims 4 to 6, **characterized in that** the solenoid valve in the valve unit is closed for determining the pressure drop and the pressure sensor determines the pressure drop.

9. The device for checking the tightness of a main air pipe of a train according to at least one of Claims 4 to 7, **characterized in that** the measuring data is transmitted from the pressure sensor to the brake testing device by means of an optical line.

**Revendications**

1. Procédé pour le contrôle d'étanchéité d'un conduit d'air principal d'un train par un instrument d'essai des freins, un volume raccordé sur l'instrument d'essai des freins étant un volume de conduit principal $V_{HL}$ auquel se rajoute un volume supplémentaire de conduits tubulaires et flexibles V' entre l'instrument d'essai des freins et une tête d'accouplement au début du train, **caractérisé en ce que**

• après un processus de remplissage, seul un débit volumétrique $V_{zu}$ nécessaire pour maintenir la pression dans le conduit rempli est alimenté dans le conduit d'air principal par un pressostat, déterminant ainsi un débit volumétrique de fuite $V_{Leck}$ qui s'écoule.

• une post-alimentation pour le maintien de la pression dans le conduit rempli est entièrement bloquée et une chute de pression $p_1 - p_2$ dans le conduit d'air principal est mesurée sur un temps de mesure $t_{mess}$ au moyen d'un capteur de pression, $p_1$ étant une pression de démarrage absolue et $p_2$ étant une pression finale absolue.

• à partir du débit volumétrique de fuite $V_{Leck}$ et de la chute de pression mesurée $p_1 - p_2$ dans le conduit d'air principal, il est déterminé à présent par calcul un rapport $f_{vorh}$ de $V_{Leck}$ au volume du conduit d'air principal $V_{HL}$, à l'aide de la relation

$$f_{vorh} = \cfrac{1}{\cfrac{p_b}{p_1 - p_2} - \cfrac{V'}{\dot{V}_{zu}} \cdot \cfrac{p_b}{\overline{p}} \cdot \cfrac{1}{t_{mess}}}$$

avec une pression p déterminée par arithmétique et une pression atmosphérique $p_b$.

2. Procédé pour le contrôle d'étanchéité d'un conduit d'air principal d'un train selon la revendication 1, **caractérisé en ce que** le volume supplémentaire V' est estimé à partir de la longueur du conduit et de la section transversale de débit des conduits tubulaires et flexibles entre l'instrument d'essai des freins et la tête d'accouplement.

3. Procédé pour le contrôle d'étanchéité d'un conduit d'air principal d'un train selon la revendication 1, **caractérisé en ce que** le volume supplémentaire V' est déterminé par une mesure selon la revendication 1, un train n'étant pas raccordé sur la tête d'accouplement, mais la tête d'accouplement étant obturée par une fermeture et le rapport $f_{vorh}$ étant ainsi déterminé par calcul, à l'aide de la relation

$$f_{vorh} = \cfrac{1}{\cfrac{p_b}{p_1 - p_2} - \cfrac{p_b}{p_1' - p_2'} \cdot \cfrac{\dot{V}_{zu}'}{\dot{V}_{zu}} \cdot \cfrac{\overline{p}'}{\overline{p}} \cdot \cfrac{t_{mess}'}{t_{mess}}}$$

4. Dispositif pour le contrôle d'étanchéité d'un conduit d'air principal d'un train, comprenant un instrument d'essai des freins, un volume susceptible d'être raccordé sur l'instrument d'essai des freins étant un volume de conduit principal $V_{HL}$ du train, auquel se rajoute un volume supplémentaire de conduits tubulaires et flexibles V' entre l'instrument d'essai des freins et une tête d'accouplement au début du conduit d'air principal du train et comprenant une première (2) et une deuxième (4) soupape électromagnétique et un capteur de débit volumétrique (5), un système de commande (7), un capteur de pression (6), un pressostat (1) et une installation de traitement des données, **caractérisé en ce que**

• le dispositif est conçu de sorte, qu'en fonctionnement de l'air comprimé à une pression réglée au pressostat (1) s'introduise par l'intermédiaire de la première soupape électromagnétique (2) dans le conduit d'air principal du train raccordé (3), alors que la deuxième soupape électromagnétique (4) est fermée
• après l'atteinte d'une pression prédéfinie d'un état de remplissage du conduit d'air principal, la première soupape électromagnétique (2) se ferme et la deuxième soupape électromagnétique (4) s'ouvre,
• l'air comprimé s'introduit dans le conduit d'air principal par l'intermédiaire d'un capteur de débit volumétrique (5) et le dispositif de commande (7) surveille la pression dans le conduit d'air principal, au moyen d'un capteur de pression (6),
• après une phase de départ, le pressostat (1) n'alimente dans le conduit d'air principal plus qu'un débit volumétrique $V_{zu}$ nécessaire pour le maintien de la pression du conduit rempli,
• les soupapes électromagnétiques (2) et (4) se ferment et bloquent totalement la post-alimentation et le capteur de pression détermine une chute de pression $p_1 - p_2$ dans le conduit d'air principal dur un temps de messure $t_{mess}$, $p_1$ étant une pression absolue de démarrage et $p_2$ étant une pression finale absolue,
• à partir du début volumétrique de fuite $V_{Leck}$ et de la chute de pression mesurée $p_1 - p_2$ dans le conduit d'air principal, l'installation de traitement des données détermine à présent un rapport $f_{vorh}$ de $V_{Leck}$ au volume du conduit d'air principal, à l'aide de la relation

$$f_{vorh} = \cfrac{1}{\cfrac{p_b}{p_1 - p_2} - \cfrac{V'}{\dot{V}_{zu}} \cdot \cfrac{p_b}{\bar{p}} \cdot \cfrac{1}{t_{mess}}}$$

**5.** Dispositif pour le contrôle d'étanchéité d'un conduit d'air principal d'un train selon la revendication 4, **caractérisé en ce qu'**une unité de soupapes (14) est insérée dans le conduit de l'instrument d'essai au train, l'unité de soupapes comprenant deux soupapes électromagnétiques (15), un pressostat (18) et un capteur de pression (16), et l'instrument d'essai des freins alimentant l'unité de soupapes avec une pression constante et l'unité de soupape commandant par voie pneumatique toutes les fonctions d'essai des freins.

**6.** Dispositif pour le contrôle d'étanchéité d'un conduit d'air principal d'un train selon la revendication 5, **caractérisé en ce que** l'instrument d'essai des freins alimente l'unité de soupapes (14) avec une pression constante de 6 bar.

**7.** Dispositif pour le contrôle d'étanchéité d'un conduit d'air principal d'un train selon au moins l'une quelconque des revendications 4 et 5, **caractérisé en ce que** l'unité de soupapes est disposée de sorte à ce que le conduit entre l'unité de soupapes et le train ne dépasse pas une longueur de 25 m.

**8.** Dispositif pour le contrôle d'étanchéité d'un conduit d'air principal d'un train selon au moins l'une quelconque des revendications 4 à 6, **caractérisé en ce que** pour déterminer la chute de pression, la soupape électromagnétique est fermée dans l'unité de soupape et le capteur de pression détermine la chute de pression.

**9.** Dispositif pour le contrôle d'étanchéité d'un conduit d'air principal d'un train selon au moins l'une quelconque des revendications 4 à 7, **caractérisé en ce que** la transmission des données mesurées du capteur de pression à l'instrument d'essai des freins est assurée via une ligne optique.

**Fig. 1**

**Fig. 2**

**Fig. 3**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10133910

- DE 10058307 B4